# EUROPEAN PATENT APPLICATION

(11) **EP 4 362 555 A1**
(43) Date of publication of application: **01.05.2024**
(21) Application number: 21946404.7
(22) Date of filing: 23.06.2021
(51) Int. Cl.: H04W 48/08

(54) **METHODS AND APPARATUS FOR DETERMINING CELL AND INDICATING SUPPORT, COMMUNICATION APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: dompatent von Kreisler Selting Werner - Partnerschaft von Patent- und Rechtsanwälten mbB
(86) International application number: PCT/CN2021/101908
(87) International publication number: WO 2022/266904

(57) **Abstract**

The present disclosure relates to a method and apparatus for determining a cell, a communication apparatus, and a storage medium. The method comprises: determining a target slice that must be accessed, as well as at least one frequency associated with the target slice; and determining, from among cells corresponding to the at least one frequency, a candidate cell that supports the target slice. According to the present disclosure, a terminal can determine, from among cells corresponding to a frequency associated with a target slice, a cell that supports the target slice as a candidate cell for subsequent use, for example, said cell can be used for cell reselection. Accordingly, it can be ensured that the candidate cell supports the target slice. After the target cell is reselected, the terminal can access the target slice, thereby accepting the related service of the target slice, and ensuring a good communication effect for the terminal.

## Description

### TECHNICAL FIELD

The present disclosure relates to a field of communication technologies, particularly to a cell determination method and device, a support indication method and device, a communication device and a computer readable storage medium.

### BACKGROUND

A network slice may provide a complete end-to-end virtual network for a particular user. Network resources can be divided into more than one 5G (5-th generation) network slice. The 5G network slices may provide differentiated services for users with different service requirements (e.g., delay, reliability, capacity, isolation, and other functions). An operator network may not only provide services for an information consumption business which takes "best effort transmission" as a communication demand feature, but also satisfy a production control service which takes "deterministic transmission" as a communication demand, and allocate logically or physically isolated network resources for services with different communication demands.

### SUMMARY

Accordingly, embodiments of the disclosure provide a cell determination method, a support indication method, a cell determination device, a support indication device, a communication device and a computer readable storage medium, to solve technical problems in related art.

According to a first aspect of the embodiments of the present disclosure, a cell determination method is provided, and the method is applicable to a terminal. The method includes: determining a target slice to be accessed and at least one frequency associated with the target slice; and determining one or more candidate cells supporting the target slice in one or more cells corresponding to the at least one frequency.

According to a second aspect of the embodiments of the present disclosure, a support indication method is provided, and the method is applicable to a network device. The method includes: sending indication information to a terminal, in which the indication information is configured for the terminal to determine one or more candidate cells supporting a target slice to be accessed in one or more cells, in which the one or more cells correspond to at least one frequency associated with the target slice.

According to a third aspect of the embodiments of the present disclosure, a cell determination device is provided, and the device is applicable to a terminal. The device includes one or more processors, and the one or more processors are configured to determine a target slice to be accessed and at least one frequency associated with the target slice; and determine one or more candidate cells supporting the target slice in one or more cells corresponding to the at least one frequency.

According to a fourth aspect of the embodiments of the present disclosure, there is provided a support indication device, and the device is applicable to a network device. The device includes one or more processors, the one or more processors are configured to send indication information to a terminal, in which the indication information is configured for the terminal to determine one or more candidate cells supporting a target slice to be accessed in one or more cells, in which the one or more cells correspond to at least one frequency associated with the target slice.

According to a fifth aspect of the embodiments of the present disclosure, a communication device is provided, including: a processor; and a memory for storing a computer program. When the computer program is executed by the processor, the cell determination method described above is implemented.

According to a sixth aspect of the embodiments of the present disclosure, a communication device is provided, including: a processor; and a memory for storing a computer program. When the computer program is executed by the processor, the support indication method described above is implemented.

According to a seventh aspect of the embodiments of the present disclosure, a computer readable storage medium storing a computer program is provided. When the computer program is executed by a processor, the steps in the cell determination method described above are implemented.

According to an eighth aspect of the embodiments of the present disclosure, a computer readable storage medium storing a computer program is provided. When the computer program is executed by a processor, the steps in the support indication method described above are implemented.

According to the embodiments of the present disclosure, the terminal may determine, in one or more cells corresponding to one or more frequencies associated with the target slice, a cell supporting the target slice as a candidate cell for subsequent use, for example, for a cell reselection. Accordingly, it can be ensured that the candidate cell supports the target slice, so that after a target cell is reselected, the terminal can access the target slice so as to accept related services of the target slice, thereby ensuring a good communication effect for the terminal.

### BRIEF DESCRIPTION OF THE DRAWINGS

To illustrate the solutions according to the embodiments of the present disclosure or in the prior art more clearly, accompanying drawings needed for describing the embodiments or the prior art are briefly introduced below. Obviously, the accompanying drawings in the following descriptions are merely some embodiments of the present disclosure, and persons of ordinary skill in the art may obtain other drawings according to the accompanying drawings without making creative efforts.
FIG. 1 is a schematic flowchart of a cell determination method according to an embodiment of the present disclosure.
FIG. 2 is a schematic diagram of a cell reselection scenario according to an embodiment of the present disclosure.
FIG. 3 is a schematic flowchart of a cell determination method according to another embodiment of the present disclosure.
FIG. 4 is a schematic flowchart of a cell determination method according to another embodiment of the present disclosure.
FIG. 5 is a schematic flowchart of a cell determination method according to another embodiment of the present disclosure.
FIG. 6 is a schematic flowchart of a cell determination method according to another embodiment of the present disclosure.
FIG. 7 is a schematic flowchart of a cell determination method according to another embodiment of the present disclosure.
FIG. 8 is a schematic flowchart of a support indication method according to an embodiment of the present disclosure.
FIG. 9 is a block diagram of a cell determination device according to an embodiment of the present disclosure.

### DETAILED DESCRIPTION

The solutions of the embodiments of the present disclosure are clearly and completely described below with reference to the accompanying drawings in the embodiments of the present disclosure. Obviously, the described embodiments are merely part of rather than all of the embodiments of the present disclosure. All other embodiments obtained by persons of ordinary skill in the art based on the embodiments of the present disclosure without making creative efforts shall fall within the protection scope of the present disclosure.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that, although terms "first", "second", "third", etc. may be used in the embodiments of the present disclosure to describe various information, such information shall not be limited by these terms. These terms are only used to distinguish the same type of information from each other. For example, first information may also be referred to as second information, and similarly, second information may also be referred to as first information, without departing from the scope of the present disclosure. As used herein, the term "if' may be construed to mean "when" or "upon" or "in response to determining" or "in accordance with a determination" that a stated condition precedent is true, depending on the context.

For purposes of brevity and ease of understanding, terms "greater than" or "less than", "higher than" or "lower than" are used herein when characterizing a size relationship. However, it can be understood by those skilled in the art that the term "greater than" also covers the meaning of "greater than or equal to", the term "less than" also covers the meaning of "less than or equal to", the term "higher than" also covers the meaning of "higher than or equal to", and the term "lower than" also covers the meaning of "lower than or equal to".

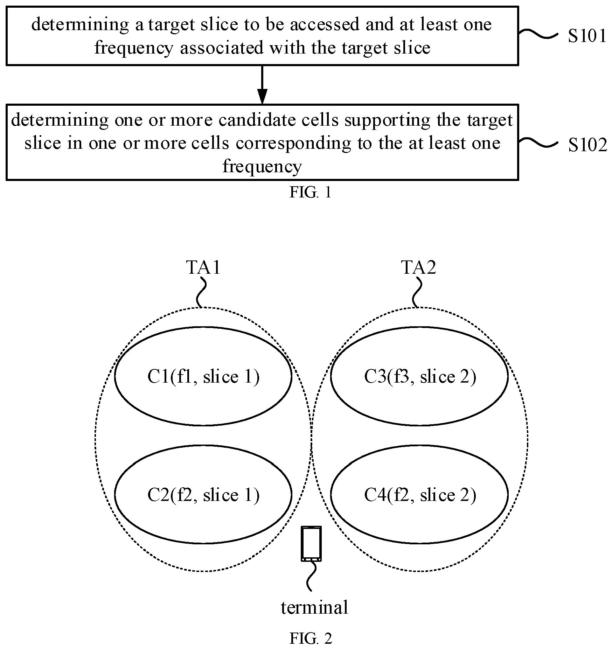

FIG. 1 is a schematic flowchart of a cell determination method according to an embodiment of the present disclosure. The cell determination method shown in the embodiment may be applied to a terminal. The terminal includes, but is not limited to, a mobile phone, a tablet computer, a wearable device, a sensor, an internet of things device, and other communication devices. The terminal may be configured as a user equipment to communicate with a network device. The network device includes, but is not limited to, a network device in a communication system such as 4G, 5G, and 6G, for example, a base station, a core network, etc.

It should be noted that a slice in all embodiments of the present disclosure specifically refers to a network slice, for example, may be a 5G network slice, or may be a network slice in another communication system.

As shown in FIG. 1, the cell determination method may include the following steps.

At step S101, a target slice to be accessed and at least one frequency associated with the target slice are determined.

At step S102, one or more candidate cells supporting the target slice are determined in one or more cells corresponding to the at least one frequency.

In an embodiment, when the terminal is in an idle state or an inactive state, the terminal may perform a cell reselection to reside in a cell with a higher frequency priority or a better signal quality. For example, the network device directly indicates a priority of each frequency, and the terminal may determine the priority of each frequency according to an indication of the network device, so as to select, from one or more cells corresponding to a frequency with a priority as high as possible, the cell with the better signal quality for the cell reselection. However, the cell reselection method has some problems.

FIG. 2 is a schematic diagram of a cell reselection scenario according to an embodiment of the present disclosure.

When the cell reselection is performed by the terminal in consideration of slices, different slices may be associated with different frequencies, and one frequency may correspond to more than one cell. As shown in FIG. 2, for tracking areas TA1 and TA2, cells C1 and C2 are located in TA1, and cells C3 and C4 are located in TA2. A slice 1 is associated with frequencies f1 and f2, and a slice 2 is associated with frequencies f2 and f3. The frequency f1 corresponds to the cell C1, the frequency f2 corresponds to the cells C2 and C4, and the frequency f3 corresponds to the cell C3, that is, the cells C1 and C2 support the slice 1, and the cells C3 and C4 support the slice 2.

The terminal is located between TA1 and TA2, and is specifically located between the cell C2 and the cell C4. An expected slice of the terminal is the slice 1. The expected (intended) slice may refer to a slice expected to be accessed by the terminal, including but not limited to at least one of the following: requested network slice selection assistance information (NSSAI) (a slice expected to be registered), allowed NSSAI (a slice allowed by a network to be used), configured NSSAI (a slice configured by the network to be used by a UE) or single network slice selection assistance information (S-NSSAI) corresponding to a business traffic (a slice corresponding to the business transmission). If the cell reselection is performed according to priorities of frequencies indicated by the network device, the terminal may reselect the cell C4. However, the cell C4 does not support the slice 1, which causes the terminal to reside in a cell that does not support the expected slice according to a cell reselection result, so that the terminal cannot obtain related services provided by the expected slice, therefore affecting a communication effect of the terminal.

In an embodiment, the terminal may determine the target slice to be accessed. The target slice is at least one slice in expected slices of the terminal, for example, different slices in the expected slices have different priorities, and the target slice may include a slice with a highest priority, or may include all or some slices in the expected slices.

In an embodiment, the target slice may be associated with more than one frequency. For example, there is one target slice, then the one slice may be associated with more than one frequency. For another example, there are multiple target slices, then each slice of the multiple target slices may be associated with more than one frequency.

In an embodiment, the multiple target slices and priorities of multiple target slices may be determined by a non-access stratum (NAS) of the terminal and provided to an access stratum (AS). The target slice may be determined based on S-NSSAI, a slice/service type (SST), a slice/slice group identifier (slice/slice group ID), an operator-defined access type, or any other slice information that may uniquely indicate the slice.

According to the embodiment of the present disclosure, the terminal may determine, in one or more cells correspond to one or more frequencies associated with the target slice, a cell supporting the target slice as a candidate cell for subsequent use, for example, for a cell reselection. Accordingly, it can be ensured that the candidate cell supports the target slice, so that after a target cell is reselected, the terminal can access the target slice to accept related services of the target slice, thereby ensuring a good communication effect of the terminal.

For example, the target slice is the slice 1, and frequencies associated with the slice 1 may be f1 and f2. Each frequency may also correspond to one or more cells, for example, one or more cells operate at the frequency, for example, f1 corresponds to the cell C1, and f2 corresponds to the cells C2 and C4. Each cell may support one or more slices, and slices supported by different cells may be different. A cell supporting a slice refers to that the terminal residing in the cell may access the slice. For example, the cells C1 and C2 support the slice 1, and the cell C4 supports the slice 2.

According to an embodiment of the present disclosure, the terminal determines that the target slice is the slice 1, the frequencies associated with the slice 1 are f1 and f2. f1 corresponds to the cell C1, and f2 corresponds to the cells C2 and C4. The cells C1 and C2 support the slice 1, and thus the cells C1 and C2 may be used as candidate cells. Accordingly, regardless of whether the cell C1 or cell C2 is reselected during a subsequent cell reselection, since both the cells C1 and C2 support the slice 1, it can be ensured that the terminal can accept the related services provided by the slice 1 when the terminal resides in the reselected cell, thereby ensuring a good communication effect of the terminal.

It should be noted that each slice may be associated with one or more frequencies, each frequency may correspond to one or more cells, and each cell may support one or more slices, which may be specifically set as needed. In addition to the cell reselection, the candidate cell may also be used for other things as needed, which may be selected as needed and not limited in the present disclosure.

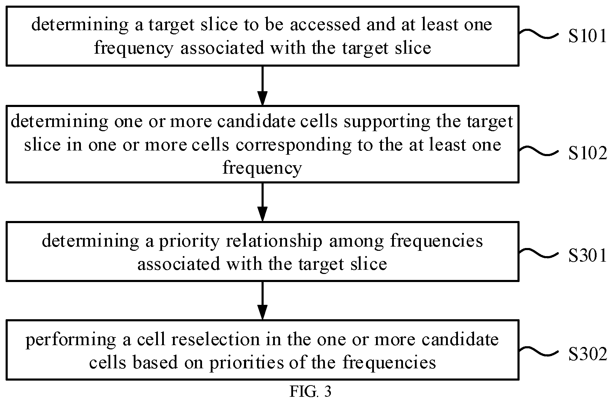

FIG. 3 is a schematic flowchart of a cell determination method according to another embodiment of the present disclosure. As illustrated in FIG. 3, the method further includes the following steps.

At step S301, a priority relationship among frequencies associated with the target slice is determined.

At step S302, a cell reselection is performed in the one or more candidate cells according to priorities of the frequencies.

In an embodiment, after determining at least one frequency associated with the target slice, if the target slice is associated with multiple frequencies, the priority relationship among the multiple frequencies may be further determined. For example, the frequencies f1 and f2 are associated with the slice 1, the priority relationship between f1 and f2 is f2 > f1, that is, the priority of f2 is higher than that of f1.

In an embodiment, a slice-related frequency priority may be provided by a base station via a broadcast system message and/or dedicated signaling. If the frequency priority is provided via the dedicated signaling, the frequency priority provided by the broadcast system message is overwritten.

The slice-related frequency priority may include all adjacent frequencies (for example, the frequencies corresponding to neighboring cells of a current serving cell), or may only include one or more frequencies that support a slice with a highest priority. If only the frequency related to the highest priority is included, the priorities of other frequencies may be provided via the broadcast system message or dedicated signaling, and the priorities of other frequencies are lower than the slice-related frequency priority.

Further, the cell reselection can be performed in the one or more candidate cells according to the priorities of frequencies. For example, it may be preferentially considered whether a signal quality of a candidate cell corresponding to the frequency with the highest priority meets a requirement. If the signal quality of the candidate cell meets the requirement, the candidate cell corresponding to the frequency with the highest priority is configured as a target cell for sorting. If the signal quality of the candidate cell does not meet the requirement, it is considered whether a signal quality of a candidate cell corresponding to a frequency with a one-level lower priority meets the requirement, and so on, until a candidate cell meeting the requirement is determined or no candidate cell meeting the requirement is determined from candidate cells corresponding to all the frequencies.

For example, in the case that the priority of f2 is higher than that of f1, the candidate cell C2 corresponding to f2 may be considered first.

If the signal quality of the cell C2 meets the requirement, the cell C2 may be sorted. Since the cell C2 is only one cell, the cell C2 may be directly reselected. If the cell C2 includes more than one cell, for example, two cells C21 and C22, the cells C21 and C22 may be sorted according to an R criterion, a cell with a higher order is preferably selected for the cell reselection, for example, the cell C21 is arranged in front of the cell C22, then the cell C21 is reselected.

If the signal quality of the cell C2 does not meet the requirement, the cell C 1 corresponding to f1 may be considered. If the signal quality of the cell C1 meets the requirement, the cell C1 may be sorted. Since the cell C2 is only one cell, the cell C1 may be directly reselected. If the cell C1 includes more than one cell, it is similar to the case where C2 includes more than one cell, and details are not described herein again.

It should be noted that, in the related art, the network device may directly indicate the priorities of the frequencies to the terminal, which may be different from the priority relationship among the multiple frequencies associated with the slice. In the embodiments of the present disclosure, when the cell reselection is performed, the priority relationship among the multiple frequencies associated with the slice is preferentially considered. If the cell reselection according to the priorities of the frequencies fails, the cell resection process may roll back to a mechanism in the related art, for example, the cell reselection is performed according to the priorities of the frequencies indicated by the network device.

With reference to the following several embodiments, illustrative examples are given for the case where the target slice includes the slice with the highest priority in the expected slices.

In an embodiment, determining one or more candidate cells supporting the target slice in the one or more cells corresponding to the at least one frequency includes:
determining whether the one or more cells corresponding to the at least one frequency support the slice with the highest priority based on indication information of the network device; and
in response to all cells of the one or more cells corresponding to the at least one frequency supporting the slice with the highest priority, determining the one or more cells corresponding to the at least one frequency as the one or more candidate cells.

In an embodiment, whether one or more cells corresponding to a frequency support the slice with the highest priority may be determined according to the indication information sent by the network device. For example, the network device may indicate whether all the cells corresponding to the frequency support the slice with the highest priority via the indication information (for example, occupying 1 bit). If all the cells support the slice with the highest priority, the cell corresponding to each frequency may be determined as the candidate cell.

In an embodiment, determining the one or more candidate cells supporting the target slice in the one or more cells corresponding to the at least one frequency includes:
determining, based on indication information of the network device, one or more slices supported by the one or more cells corresponding to the at least one frequency; and
determining one or more cells supporting the slice with the highest priority in the one or more cells corresponding to the at least one frequency as the one or more candidate cells.

In an embodiment, the network device may indicate one or more slices supported by one or more cells corresponding to a frequency via indication information (the number of occupied bits is related to the number of the slices). The terminal may determine one or more cells supporting the slice with the highest priority as the one or more candidate cells according to the indication information.

In an embodiment, determining the one or more candidate cells supporting the target slice in the one or more cells corresponding to the at least one frequency includes:
determining, based on indication information of the network device, a cell list including one or more cells that support the slice with the highest priority in the one or more cells corresponding to the at least one frequency; and
determining the one or more cells in the cell list as the one or more candidate cells.

In an embodiment, the network device may determine the one or more cells supporting the slice with the highest priority, and generate the cell list and send the cell list to the terminal, so that the terminal may determine that all cells in the cell list are candidate cells.

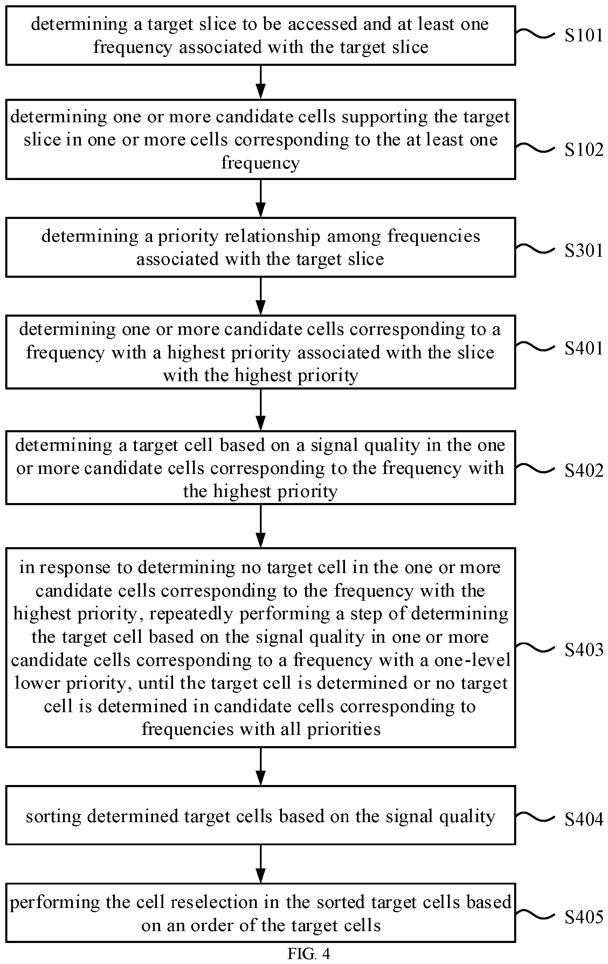

FIG. 4 is a schematic flowchart of a cell determination method according to another embodiment of the present disclosure. As shown in FIG. 4, performing the cell reselection in the one or more candidate cells based on the priorities of the frequencies includes the following steps.

At step S401, one or more candidate cells corresponding to a frequency with a highest priority associated with the slice with the highest priority are determined.

At step S402, a target cell is determined based on a signal quality in the one or more candidate cells corresponding to the frequency with the highest priority.

At step S403, in response to determining no target cell in the one or more candidate cells corresponding to the frequency with the highest priority, a step of determining the target cell based on the signal quality in one or more candidate cells corresponding to a frequency with a one-level lower priority is performed repeatedly, until the target cell is determined or no target cell is determined in candidate cells corresponding to frequencies with all priorities.

At step S404, target cells are sorted based on the signal quality.

At step S405, the cell reselection is performed in the sorted target cells based on an order of the target cells.

In an embodiment, for the slice with the highest priority, the frequency with the highest priority may be determined in associated frequencies, the one or more candidate cells corresponding to the frequency with the highest priority are determined, and then the target cell is determined according to the signal quality in the one or more candidate cells corresponding to the frequency with the highest priority. A manner of determining the target cell according to the signal quality may be determining the target cell according to an S criterion.

If no target cell is determined in the one or more candidate cells corresponding to the frequency with the highest priority, for example, there is no cell satisfying the S criterion, the step of determining the target cell according to the signal quality in the one or more candidate cells corresponding to the frequency with the one-lever lower priority may be repeatedly performed. That is, according to the priorities from high to low, the target cell is determined in the one or more cells corresponding to a frequency with one of the priorities. Accordingly, it can be ensured that the signal quality of the determined target cell meets the requirement, and the priority of the corresponding frequency is as high as possible.

After the target cell is determined, if one target cell is determined, the target cell may be directly reselected. If more than one target cell is determined, the determined target cells may be sorted according to the signal quality, for example, the target cells may be sorted according to the R criterion, and the cell reselection is performed in the sorted target cells according to the order of the target cells, for example, a cell sorted in front is preferentially reselected.

It should be noted that the S criterion and the R criterion are well known in the related art. The present disclosure follows the meaning of the S criterion and the R criterion in the related art, and details are not described herein again.

In an embodiment, the method further includes:
in response to determining no target cell in cells corresponding to all frequencies associated with the slice with the highest priority, performing the cell reselection based on priorities of the frequencies indicated by the network device.

In the case that only the slice with the highest priority is considered, if no target cell is determined in the cells corresponding to the frequencies with all the priorities associated with the slice with the highest priority, the cell reselection can be performed according to the priorities of the frequencies indicated by the network device, i.e., a cell reselection mechanism in the related art is returned to perform the cell reselection, so as to ensure that the terminal at least can complete the cell reselection.

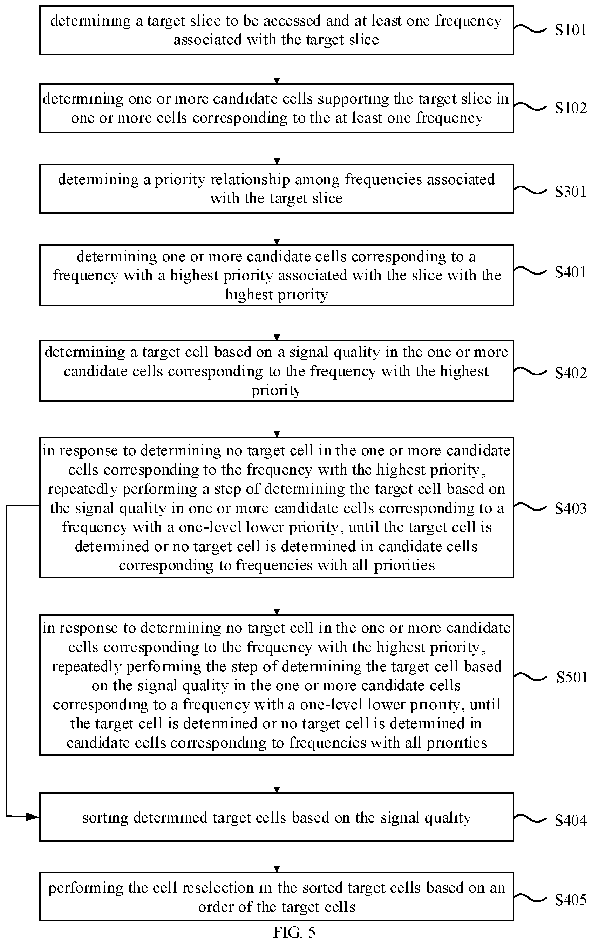

Correspondingly, in the case where other slices in the expected slices are considered in the following embodiment shown in FIG. 5, if no target cell is determined in the cells corresponding to all the frequencies associated with the slice with the highest priority, it may be further determined whether there is a target cell in the candidate cells corresponding to frequencies associated with the other slices. If no target cell is determined in the candidate cells corresponding to the frequencies associated with the other slices, the cell reselection may be performed according to the priorities of the frequencies indicated by the network device.

In an embodiment, performing the cell reselection in the sorted target cells based on the order of the target cells includes:
in a case that a target cell with a highest order (which may also be referred to as ranked at the top) is a suitable cell, reselecting the target cell with the highest order;
in a case that the target cell with the highest order is not a suitable cell, withholding the cell reselection in the target cell with the highest order and an intra-frequency (intra-freq) cell thereof within a preset duration.

In an embodiment, it may be determined whether the target cell with the highest order corresponding to the frequency associated with the slice with the highest priority is a suitable cell. The suitable cell satisfies at least one of the following conditions: not being prohibited, not belonging to a prohibited tracking area, a public land mobile network (PLMN) of the cell meeting a requirement, etc.

In the case that the target cell with the highest order is a suitable cell, the target cell with the highest order may be reselected. Since the target cell with the highest order is most likely to be a suitable cell at its corresponding frequency, if the target cell with the highest order is not a suitable cell, then none of the cells at the corresponding frequency of the target cell with the highest order is a suitable cell. Therefore, the cell reselection may be not performed in the target cell with the highest order and its intra-freq cells within the preset duration (which can be set as needed, for example, 5 minutes) to avoid waste of resources.

With reference to the following several embodiments, illustrative examples are given for the case where the target slice includes the slice with the highest priority and other slices in the expected slices, for example, including all slices in the expected slices.

In an embodiment, the target slice further includes other slices in the expected slices. That is, the target slice includes all or some slices in the expected slices (at least one slice other than the slice with the highest priority), so that the target cell can be determined for frequencies associated with all or some of the expected slices.

FIG. 5 is a schematic flowchart of a cell determination method according to another embodiment of the present disclosure. As shown in FIG. 5, performing the cell reselection in the one or more candidate cells according to the priorities of the frequencies further includes the following steps.

At step S501, in response to determining no target cell in cells corresponding to all frequencies associated with the slice with the highest priority, a step of determining a slice with a one-level lower priority in the other slices and determining the target cell based on the signal quality in one or more candidate cells corresponding to a frequency associated with the slice with the one-level lower priority is performed repeatedly, until the target cell is determined or no target cell is determined in cells corresponding to frequencies associated with target slices with all priorities.

In an embodiment, in response to determining no target cell in the cells corresponding to all frequencies associated with the slice with the highest priority, the candidate cells corresponding to the frequencies associated with the other slices may be considered, for example, it can be determined per slice according to the priorities of slices. Firstly, the target cell is determined according to the signal quality in the candidate cells corresponding to the frequency associated with the slice with the one-level lower priority. If no target cell is determined, the target cell is determined according to the signal quality in the candidate cells corresponding to the frequency associated with the slice with one-more-level lower priority, and so on, until the target cell is determined or no target cell is determined in the cells corresponding to the frequencies associated with all the target slices, and the cell reselection can be performed according to the priorities of the frequencies indicated by the network device.

In an embodiment, determining the target cell based on the signal quality in the one or more candidate cells corresponding to the frequency associated with the slice with the one-level lower priority includes:
determining one or more candidate cells corresponding to a frequency with a highest priority associated with the slice with one-level lower priority;
determining the target cell based on the signal quality in the one or more candidate cells corresponding to the frequency with the highest priority; and
in response to determining no target cell in the one or more candidate cells corresponding to the frequency with the highest priority, the step of determining the target cell based on the signal quality in one or more candidate cells corresponding to a frequency with one-level lower priority is performed repeatedly, until the target cell is determined or no target cell is determined in candidate cells corresponding to frequencies with all priorities.

In an embodiment, for the slice with one-level lower priority, the frequency with the highest priority may be determined in associated frequencies, the one or more candidate cells corresponding to the frequency with the highest priority are determined, and then the target cell is determined according to the signal quality in the one or more candidate cells corresponding to the frequency with the highest priority. A manner of determining the target cell according to the signal quality may be that the target cell is determined according to the S criterion.

If no target cell is determined in the one or more candidate cells corresponding to the frequency with the highest priority, for example, there is no cell satisfying the S criterion, the step of determining the target cell according to the signal quality in the one or more candidate cells corresponding to the frequency with the one-lever lower priority may be repeatedly performed. That is, according to the priorities from high to low, the target cell is determined in the one or more cells corresponding to the frequency with one of the priorities. Accordingly, it can be ensured that the signal quality of the determined target cell meets the requirement, and the priority of the corresponding frequency is as high as possible.

It should be noted that the steps in the embodiment may be executed before step S404 of the embodiment shown in FIG. 4. After the steps in the embodiment are executed, step S404 and step S405 continue to be executed, that is, when the target cell is determined in the cells corresponding to the frequencies associated with the other slices, the determined target cell may also be sorted according to the signal quality, and the cell reselection is performed in the sorted target cells according to the order of the target cells.

In an embodiment, in a case that the target cell is determined in the one or more candidate cells corresponding to the frequency associated with the slice with the one-level lower priority, performing the cell reselection in the sorted target cells based on the order of the target cells includes:
in a case that a target cell with the highest order corresponding to the frequency associated with the slice with the one-level lower priority is a suitable cell, reselecting the target cell with the highest order;
in a case that the target cell with the highest order corresponding to the frequency associated with the slice with the one-level lower priority is not a suitable cell, and the target cell with the highest order corresponding to the frequency associated with the slice with the one-level lower priority and its intra-freq cell only support the slice with the one-level lower priority, withholding the cell reselection in the target cell with the highest order corresponding to the frequency associated with the slice with the one-level lower priority and its intra-freq cell within a preset duration.

In an embodiment, it may be determined whether the target cell with the highest order corresponding to the frequency associated with the slice with the one-level lower priority is a suitable cell. The suitable cell satisfies at least one of the following conditions: not being prohibited, not belonging to a prohibited tracking area, a PLMN of the cell meeting a requirement, etc.

In a case that the target cell with the highest order corresponding to the frequency associated with the slice with the one-level lower priority is a suitable cell, the target cell with the highest order may be reselected. Since the target cell with the highest order is most likely to be a suitable cell at its corresponding frequency, if the target cell with the highest order is not a suitable cell, none of the cells at the frequency corresponding to the target cell with the highest order is a suitable cell. Therefore, the cell reselection may not be performed in the target cell with the highest order corresponding to the frequency associated with the slice with the one-level lower priority and its intra-freq cell within the preset duration (which can be set as needed, for example, 5 minutes) to avoid waste of resources.

In an embodiment, determining the one or more candidate cells supporting the target slice in the one or more cells corresponding to the at least one frequency includes:
determining a list of target slices supported by the frequency; in which the terminal may determine the list according to a correspondence between frequencies and slices issued by a base station;
determining whether the list is applicable to all of the one or more cells corresponding to the frequency based on indication information of the network device; and
in a case that the list is applicable to all of the one or more cells corresponding to the frequency, determining all of the one or more cells corresponding to the frequency as one or more candidate cells corresponding to the target slices associated with the frequency.

In an embodiment, whether a cell corresponding to a frequency supports the slice with the highest priority may be determined according to the indication information sent by the network device.

When considering multiple target slices, one frequency may be associated with multiple slices, so that a list of target slices supported by the frequency may be determined, and it may be determined whether the list is applicable to all of the one or more cells corresponding to the frequency according to indication information (for example, occupying 1 bit) of the network device. If the list is applicable to all of the one or more cells corresponding to the frequency, all of the one or more cells corresponding to the frequency support the slices in the list, so that all of the one or more cells corresponding to the frequency may be determined as the one or more candidate cells corresponding to the target slices associated with the frequency.

For example, for a certain frequency f0, the frequency supports the slice 1 and the slice 2, then the list includes two slices, i.e., the slice 1 and the slice 2. If the list is applicable to all the cells at the frequency f0, it can be determined that all the cells at the frequency f0 support the slice 1 and the slice 2, so that all the cells at the frequency can be the candidate cells corresponding to the slice 1 and the candidate cells corresponding to the slice 2.

In an embodiment, determining the one or more candidate cells supporting the target slice in the one or more cells corresponding to the at least one frequency includes:
determining a list of target slices supported by the frequency;
determining one or more cells to which the list is applicable based on indication information of the network device; and
determining the one or more cells to which the list is applicable as the one or more candidate cells corresponding to the target slices associated with the frequency.

In an embodiment, when considering multiple target slices, one frequency may be associated with multiple slices, so that the list of target slices supported by the frequency may be determined. The one or more cells to which the list is applicable may be determined according to the indication information (the number of occupied bits is related to the number of the one or more cells to which the list is applicable) of the network device, so that the one or more cells to which the list is applicable may be determined as the one or more candidate cells corresponding to the target slices associated with the frequency.

For example, for a certain frequency f0, the frequency supports the slice 1 and the slice 2, then the list includes two slices, i.e., the slice 1 and the slice 2. If the list is applicable to the cells C1 and C2, it can be determined that the cells C1 and C2 are both candidate cells corresponding to the slice 1 and the candidate cells corresponding to the slice 2.

In an embodiment, determining the one or more candidate cells supporting the target slice in the one or more cells corresponding to the at least one frequency includes:
determining, based on indication information of the network device, one or more slices supported by one or more cells corresponding to each frequency; and
determining, in the one or more cells corresponding to each frequency, one or more cells supporting target slices associated with the frequency as the one or more candidate cells corresponding to the target slices associated with the frequency.

In an embodiment, when considering multiple target slices, the one or more slices supported by the one or more cells corresponding to each frequency may be determined according to the indication information of the network device. In the one or more cells corresponding to each frequency, one or more cells supporting the target slices associated with the frequency are determined as the one or more candidate cells corresponding to the target slices associated with the frequency.

For example, for a certain frequency f0, slices associated with f0 are the slice 1 and the slice 2, and f0 corresponds to the cells C1 and C3. The cell C1 supports the slice 1 and the slice 2. The cell C3 supports the slice 1 and a slice 3. Then it can be determined that the candidate cells corresponding to the slice 1 are the cells C1 and C3, and the candidate cell corresponding to the slice 2 is the cell C1.

In a cell reselection process, the steps of a cell signal quality measurement, cell sorting, a cell reselection and the like are mainly included. The steps of the signal quality measurement and the cell reselection in the cell reselection process are illustratively described below with reference to several embodiments.

Based on different modes of the cell reselection, frequencies of cells to be considered are different. For example, for an inter-freq cell reselection and an inter-RAT cell reselection, generally three modes of a high-priority frequency cell reselection, a same-priority frequency cell reselection, and a low-priority frequency cell reselection are included, and the frequencies of cells to be considered in the three modes may be different. For an intra-freq cell reselection, only frequency cells need to be considered.

It should be noted that in subsequent several embodiments, one cell reselection mode may be performed, or more than one cell reselection mode may be performed. An execution sequence is that the high-priority frequency cell reselection is preferentially performed, then the same-priority frequency cell reselection is performed, and the low-priority cell frequency reselection is last performed.

In an embodiment, the modes of the cell reselection include the same-priority frequency cell reselection and/or the low-priority frequency cell reselection, and the method further includes:
in response to a signal quality of a current serving cell being lower than a first quality threshold or not supporting the target slice, measuring a signal quality of a same-priority frequency cell and/or a low-priority frequency cell of the current serving cell in the one or more candidate cells.

When the same-priority frequency cell reselection is performed, whether the current serving cell of the terminal meets the requirement may be considered, for example, it can be determined whether the signal quality of the current serving cell is lower than the first quality threshold, or whether the current serving cell supports the target slice. If the signal quality of the current serving cell is lower than the first quality threshold, or the current serving cell does not support the target slice, it can be determined that the current serving cell does not meet the requirement, so that the signal quality of the same-priority frequency cell of the current serving cell is determined in the one or more candidate cells, and the same-priority frequency cell reselection is performed based on the measured signal quality.

Similar, when the low-priority frequency cell reselection is performed, whether the current serving cell of the terminal meets the requirement may be considered, for example, it can be determined whether the signal quality of the current serving cell is lower than the first quality threshold, or whether the current serving cell supports the target slice. If the signal quality of the current serving cell is lower than the first quality threshold, or the current serving cell does not support the target slice, it can be determined that the current serving cell does not meet the requirement, so that the signal quality of the low-priority frequency cell of the current serving cell is determined in the one or more candidate cells, and the same-priority frequency cell reselection is performed based on the measured signal quality.

It should be noted that in the embodiment and the following several embodiments, in a case that the target slice only includes the slice with the highest priority, the cell supporting the target slice means that the cell supports the slice with the highest priority. In a case that the target slice further includes other slices, the cell supporting the target slice means that the cell supports the slice currently considered. For example, when it is determined whether the target slice exists in consideration of a slice with a secondary highest priority after considering the slice with the highest priority, the cell supporting the target slice refers to that the cell supports the slice with the secondary highest priority.

A high-priority frequency cell refers to a cell having a frequency with a higher priority than the frequency of the current serving cell. The same-priority frequency cell refers to a cell having a frequency with the same priority (which may be a same frequency, or may be a different frequency with the same priority) as the frequency of the current serving cell. The low-priority frequency cell refers to a cell having a frequency with a lower priority than the frequency of the current serving cell. The priorities of the frequencies are determined on the basis of a priority relationship among the frequencies associated with the slice currently considered.

In an embodiment, in a case of measuring the signal quality of the same-priority frequency cell of the current serving cell in the one or more candidate cells, determining the one or more candidate cells supporting the target slice in the one or more cells corresponding to the at least one frequency includes:

determining one or more candidate cells supporting the target slice in one or more same-priority frequency cells of the current serving cell, in which a mode of the cell reselection is the same-priority frequency cell reselection.

When the same-priority frequency cell reselection is performed, determining the candidate cell refers to determining the candidate cell supporting the target slice in one or more same-priority frequency cells of the current serving cell, so that it can be ensured that the determined candidate cell supports the target slice and is a same-priority frequency cell. The determined candidate cell may further satisfy the S criterion.

In an embodiment, in a case of measuring the signal quality of the low-priority frequency cell of the current serving cell in the one or more candidate cells, the method further includes:

in response to the signal quality of the current serving cell being lower than a second quality threshold, determining a cell supporting the target slice and having a signal quality higher than a third quality threshold in one or more low-priority frequency cells of the current serving cell as a candidate cell, in which a mode of the cell reselection is the low-priority frequency cell reselection.

When the low-priority frequency cell reselection is performed, determining the candidate cell refers to determining the cell supporting the target slice and having a signal quality higher than the third quality threshold in the one or more low-priority frequency cells of the current serving cell as the candidate cell, so that it can be ensured that the determined candidate cell supports the target slice and is a low-priority frequency cell, and the signal quality also meets the requirement. The determined candidate cell may further satisfy the S criterion.

In an embodiment, the mode of the cell reselection includes the high-priority frequency cell reselection, and the method further includes:
determining whether there is a frequency with a higher priority compared to the current serving cell, in which the frequency with the higher priority is a frequency associated with the target slice;
if yes, measuring a signal quality of a high-priority frequency cell.

When the high-priority frequency cell reselection is performed, there is no need to consider whether the current serving cell of the terminal meets the requirement, but only a need to consider whether there is the frequency with the higher priority compared to the current serving cell. The frequency with the higher priority is associated with a target slice currently considered. If there is the frequency with the higher priority, the signal quality of the high-priority frequency cell can be measured, and the same-priority frequency cell reselection is performed based on the measured signal quality.

In an embodiment, the method further includes:
determining a cell supporting the target slice and having a signal quality higher than a fourth quality threshold in one or more high-priority frequency cells of the current serving cell as a candidate cell, in which the mode of the cell reselection is the high-priority frequency cell reselection.

When the high-priority frequency cell reselection is performed, determining the candidate cell refers to determining the cell supporting the target slice and having a signal quality higher than the third quality threshold in the one or more high-priority frequency cells of the current serving cell as the candidate cell, so that it can be ensured that the determined candidate cell supports the target slice and is a high-priority frequency cell, and the signal quality also meets the requirement. The determined candidate cell may further satisfy the S criterion.

It should be noted that criteria for the high-priority frequency cell reselection, the same-priority frequency cell reselection, and the low-priority frequency cell reselection are not concerns of the present disclosure, reference may be made to the criteria in the related art, which are not limited in the present disclosure.

In an embodiment, the method further includes:
in response to the signal quality of the current service cell being lower than the second quality threshold or the current service cell not supporting the target slice, and in response to there being a cell supporting the target slice in the one or more intra-frequency cells of the current serving cell, measuring a signal quality of an intra-frequency cell of the current serving cell in the one or more candidate cells.

When the intra-frequency cell reselection is performed, it can be judged whether the current serving cell meets the requirement and whether there is an intra-frequency cell that meets the requirement. If the current serving cell does not meet the requirement, for example having the signal quality lower than the second quality threshold or not supporting the target slice, and there is a cell that meets the requirement in the one or more intra-frequency cells of the current serving cell, for example a cell supporting the target slice, the signal quality of the intra-frequency cell of the current serving cell can be measured in the one or more candidate cells.

In an embodiment, determining the one or more candidate cells supporting the target slice in the one or more cells corresponding to the at least one frequency includes:
determining a cell supporting the target slice in the one or more intra-frequency cells of the current serving cell as a candidate cell.

When the intra-freq cell reselection is performed, determining the candidate cell refers to determining the cell supporting the target slice and having the signal quality higher than the third quality threshold in the one or more intra-priority frequency cells of the current serving cell as the candidate cell, so that it can be ensured that the determined candidate cell supports the target slice and is an intra-freq cell. The determined candidate cell may further satisfy the S criterion.

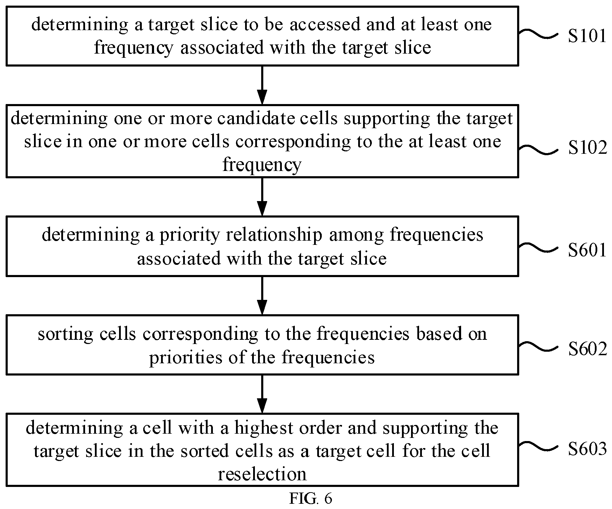

FIG. 6 is a schematic flowchart of a cell determination method according to another embodiment of the present disclosure. As illustrated in FIG. 6, the method further includes the following steps.

At step S601, a priority relationship among frequencies associated with the target slice is determined.

At step S602, cells corresponding to the frequencies are sorted based on priorities of the frequencies.

At step S603, a cell with the highest order and supporting the target slice in the sorted cells is determined as a target cell for the cell reselection.

In an embodiment, after determining the at least one frequency associated with the target slice, if the target slice is associated with multiple frequencies, the priority relationship among the multiple frequencies may be further determined. For example, the slice 1 is associated with the frequencies f1 and f2, the priority relationship between f1 and f2 is f2 > f1, that is, the priority of f2 is higher than that of f1.

In an embodiment, a slice-related dedicated priority may be provided by a base station via a broadcast system message and/or proprietary signaling. If the frequency priority is provided via the dedicated signaling, the frequency priority provided by the broadcast system message is overwritten.

The slice-related frequency priority may include all adjacent frequencies (for example, the frequencies corresponding to neighboring cells of the current serving cell), or may only include one or more frequencies that support a slice with a highest priority. If only the frequency related to the highest priority is included, the priorities of other frequencies may be provided via the broadcast system message or dedicated signaling, and the priorities of other frequencies are lower than the slice-related frequency priority.

Further, the cells corresponding to the frequencies can be sorted according to the priorities of the frequencies. For example, the cells corresponding to the frequency with highest priority can be sorted and the target cell is determined. If no target cell is determined, the cells corresponding to the frequency with the one-level lower priority are sorted and the target cell is determined. When the cells corresponding to the frequency are sorted, the cells may be sorted according to the signal qualities of the cells, for example, may be specifically sorted according to the R criteriion.

Finally, a cell with the highest order and supporting the target slice in the sorted cells may be determined as the target cell for the cell reselection. Accordingly, it can be ensured that the reselected target cell supports the target slice, and is ranked at the top, that is, the signal quality is relatively better, which is beneficial to ensuring a good communication effect.

Different from the embodiment shown in FIG. 3, in the embodiment shown in FIG. 6, it is considered whether the cell with the highest order supports the target slice after the cells are sorted, while in the embodiment shown in FIG. 3, the cells supporting the target slice are first determined, and then the cells are sorted.

It should be noted that the determined target cell for the cell reselection may satisfy at least one of the following conditions: not being prohibited, not belonging to the prohibited tracking area, and a PLMN of the cell meeting a requirement.

In an embodiment, determining the target cell in the step S603 specifically includes determining whether the cell with the highest order is a suitable cell, and if the cell is a suitable cell, determining the cell as the target cell for the cell reselection. On the basis of the condition that the suitable cell needs to meet in the related art, in the embodiment of the present disclosure, the suitable cell also needs to meet a condition of supporting the target slice.

In an embodiment, determining the target cell in the step S603 specifically includes determining whether the cell with the highest order is a cell of a newly defined type, and if the cell is a cell of a newly defined type, determining the cell as the target cell for the cell reselection. On the basis of the condition that the suitable cell needs to meet in the related art, the cell of the newly defined type also needs to meet the condition of supporting a target slice.

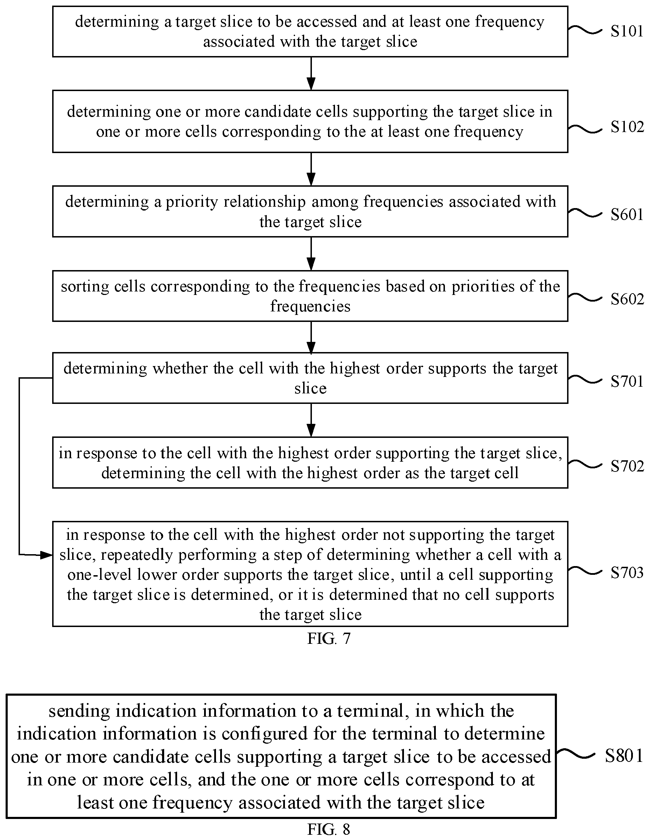

FIG. 7 is a schematic flowchart of a cell determination method according to another embodiment of the present disclosure. As shown in FIG. 7, determining the cell with the highest order and supporting the target slice in the sorted cells as the target cell for the cell reselection includes the following steps.

At step S701, it is determined whether the cell with the highest order supports the target slice.

At step S702, in response to the cell with the highest order supporting the target slice, the cell with the highest order is determined as the target cell.

At step S703, in response to the cell with the highest order not supporting the target slice, a step of determining whether a cell with a one-level lower order supports the target slice is performed repeatedly, until the cell supporting the target slice is determined or it is determined that no cell supports the target slice.

Whether the cell with the highest order supports the target slice may be first considered. If yes, the cell may be determined as the target cell. If not, it may be considered whether the cell with the one-level lower order supports the target slice, and if not, it is considered whether the cell with a one-more-level lower order supports the target slice, and so on, until the cell supporting the target slice is determined or it is determined that no cell supports the target slice.

In an embodiment, the target slice includes the slice with the highest priority in the expected slices of the terminal. In this case, the cell supporting the target slice refers to that the cell supports the slice with the highest priority.

In an embodiment, the target slice includes the expected slices of the terminal, and the method includes:
performing the steps in the embodiment shown in FIG. 7 for the slice with the highest priority in the expected slices; and
in response to determining no target cell, repeatedly performing a step of performing the steps in the embodiment shown in FIG. 7 for the slice with the one-level lower priority in the expected slices, until the target cell is determined, or no target cell is determined for all slices in the expected slices.

In a case that the target cells includes not only the slice with the highest priority in the expected slices, but also other slices in the expected slices, if no target cell is determined for the slice with the highest priority according to the steps in the embodiment shown in FIG. 7, the target cell may be determined for the slice with the one-level lower priority according to the steps in the embodiment shown in FIG. 7, and if no target cell is determined, the target cell may be determined for the slice with the one-more-level lower priority according to the steps in the embodiment shown in FIG. 7, and so on, until the cell supporting the target slice is determined, or no target cell is determined for all the slices.

It should be noted that, for other slices in the expected slice, the steps in the embodiment shown in FIG. 7 may not be performed one by one. For example, slices that need to be considered or need not to be considered may be determined according to indication information of the network device. The steps in the embodiment shown in FIG. 7 may be performed only for the slice that needs to be considered.

FIG. 8 is a schematic flowchart of a support indication method according to an embodiment of the present disclosure. The support indication method shown in the embodiment may be applied to a network device. The network device includes, but is not limited to, a network device in a communication system such as 4G, 5G, and 6G, for example a base station, a core network, etc. The network device may communicate with a terminal. The terminal includes, but is not limited to, a mobile phone, a tablet computer, a wearable device, a sensor, an internet of things device, or other communication devices.

As shown in FIG. 8, the support indication method may include the following steps.

At step S801, indication information is sent to a terminal, the indication information is configured for the terminal to determine one or more candidate cells supporting a target slice to be accessed in one or more cells, the one or more cells correspond to at least one frequency associated with the target slice.

In an embodiment, the target slice includes a slice with a highest priority in expected slices of the terminal.

In an embodiment, the indication information is configured to indicate whether the one or more cells corresponding to the frequency support the slice with the highest priority.

In an embodiment, the indication information is configured to indicate whether at least one of the one or more cells corresponding to the at least one frequency supports the slice with the highest priority.

In an embodiment, the indication information is configured to indicate one or more slices supported by the one or more cells corresponding to the at least one frequency.

In an embodiment, the target slice further includes other slices in the expected slices.

In an embodiment, the indication information is configured to indicate whether a list of target slices supported by the frequency is applicable to all cells corresponding to the frequency.

In an embodiment, the indication information is configured to indicate one or more cells to which the list of target slices supported by the frequency is applicable.

In an embodiment, the indication information is configured to indicate one or more slices supported by one or more cells corresponding to each frequency.

Corresponding to foregoing embodiments of the cell determination method, an embodiment of a cell determination device is further provided in the present disclosure.

The cell determination device is further provided in the embodiments of the present disclosure, which is applicable to a terminal, and the terminal includes, but is not limited to, a mobile phone, a tablet computer, a wearable device, a sensor, an internet of things device, or other communication devices. The terminal may be configured as a user equipment to communicate with a network device. The network device includes, but is not limited to, a network device in a communication system such as 4G, 5G, and 6G, for example, a base station, a core network, etc.

The device includes one or more processors. The one or more processors are configured to determine a target slice to be accessed and at least one frequency associated with the target slice; and determine one or more candidate cells supporting the target slice in one or more cells corresponding to the at least one frequency.

In an embodiment, the one or more processors are further configured to determine a priority relationship among frequencies associated with the target slice; and perform a cell reselection in the one or more candidate cells based on priorities of the frequencies.

In an embodiment, the target slice is at least one slice in expected slices of the terminal.

In an embodiment, the target slice includes a slice with a highest priority in the expected slices.

In an embodiment, the one or more processors are configured to determine whether the one or more cells corresponding to the at least one frequency support the slice with the highest priority based on indication information of a network device; and in response to all cells of the one or more cells corresponding to the at least one frequency supporting the slice with the highest priority, determine the one or more cells corresponding to the at least one frequency as the one or more candidate cells.

In an embodiment, the one or more processors are configured to determine one or more slices supported by the one or more cells corresponding to the at least one frequency based on indication information of a network device; and determine one or more cells supporting the slice with the highest priority in the one or more cells corresponding to the at least one frequency as the one or more candidate cells.

In an embodiment, the one or more processors are configured to determine, based on indication information of a network device, a cell list comprising one or more cells that support the slice with the highest priority in the one or more cells corresponding to the at least one frequency; and determine the one or more cells in the cell list as the one or more candidate cells.

In an embodiment, the one or more processors are configured to determine one or more candidate cells corresponding to a frequency with a highest priority associated with the slice with the highest priority;
determine a target cell based on a signal quality in the one or more candidate cells corresponding to the frequency with the highest priority;
in response to determining no target cell in the one or more candidate cells corresponding to the frequency with the highest priority, repeatedly perform a step of determining the target cell based on the signal quality in one or more candidate cells corresponding to a frequency with a one-level lower priority, until the target cell is determined or no target cell is determined in candidate cells corresponding to frequencies with all priorities;
sort target cells based on the signal quality; and
perform he cell reselection in the target cells based on an order of the target cells.

In an embodiment, the one or more processors are configured to, in response to determining no target cell in cells corresponding to all frequencies associated with the slice with the highest priority, perform the cell reselection based on priorities of the frequencies indicated by a network device.

In an embodiment, the one or more processors are configured to reselect a target cell with a highest order in a case that the target cell with the highest order is a suitable cell; withhold the cell reselection in the target cell with the highest order and an intra-freq cell thereof within a preset duration in a case that the target cell with the highest order is not a suitable cell.

In an embodiment, the target slices further includes other slices in the expected slices.

In an embodiment, the one or more processors are configured to, in response to determining no target cell in cells corresponding to all frequencies associated with the slice with the highest priority, repeatedly perform a step of determining a slice with a one-level lower priority in the other slices and determining the target cell based on the signal quality in one or more candidate cells corresponding to a frequency associated with the slice with the one-level lower priority, until the target cell is determined or no target cell is determined in cells corresponding to frequencies associated with target slices with all priorities.

In an embodiment, the one or more processors are configured to determine one or more candidate cells corresponding to a frequency with a highest priority associated with the slice with the one-level lower priority;
determine the target cell based on the signal quality in the one or more candidate cells corresponding to the frequency with the highest priority; and
in response to determining no target cell in the one or more candidate cells corresponding to the frequency with the highest priority, repeatedly perform the step of determining the target cell based on the signal quality in one or more candidate cells corresponding to a frequency with a one-level lower priority, until the target cell is determined or no target cell is determined in candidate cells corresponding to frequencies with all priorities.

In an embodiment, in a case that the target cell is determined in the one or more candidate cells corresponding to the frequency associated with the slice with the one-level lower priority, the one or more processors are configured to, in a case that a target cell with the highest order corresponding to the frequency associated with the slice with the one-level lower priority is a suitable cell, reselect the target cell with the highest order; and;
in a case that the target cell with the highest order corresponding to the frequency associated with the slice with the one-level lower priority is not a suitable cell, and that the target cell with the highest order corresponding to the frequency associated with the slice with the one-level lower priority and an intra-frequency cell thereof only support the slice with the one-level lower priority, withhold the cell reselection in the target cell with the highest order corresponding to the frequency associated with the slice with the one-level lower priority and the intra-frequency cell thereof within a preset duration.

In an embodiment, the one or more processors are configured to: determine a list of target slices supported by the at least one frequency;
determine whether the list is applicable to all of one or more cells corresponding to the at least one frequency based on indication information of the network device; and
in a case that the list is applicable to all of the one or more cells corresponding to the at least one frequency, determine all of the one or more cells corresponding to the at least one frequency as one or more candidate cells corresponding to the target slices associated with the at least one frequency.

In an embodiment, the one or more processors are configured to: determine a list of target slices supported by the at least one frequency;
determine one or more cells to which the list is applicable based on indication information of the network device; and
determine the one or more cells as one or more candidate cells corresponding to the target slices associated with the at least one frequency.

In an embodiment, the one or more processors are configured to determine, based on indication information of the network device, one or more slices supported by one or more cells corresponding to each frequency; and determine, in the one or more cells corresponding to each frequency, one or more cells supporting target slices associated with the at least one frequency as one or more candidate cells corresponding to the target slices associated with the at least one frequency.

In an embodiment, the cell reselection includes a same-priority frequency and/or a low-priority frequency cell reselection, the one or more processors are configured to, in response to a signal quality of a current serving cell being lower than a first quality threshold or not supporting the target slice, measure a signal quality of a same-priority frequency cell and/or a low-priority frequency cell of the current serving cell in the one or more candidate cells.

In an embodiment, in a case of measuring the signal quality of the same-priority frequency cell of the current serving cell in the one or more candidate cells, the one or more processors are configured to determine one or more candidate cells supporting the target slice in one or more same-priority frequency cells of the current serving cell, in which the cell reselection is the same-priority frequency cell reselection.

In an embodiment, in a case of measuring the signal quality of the low-priority frequency cell of the current serving cell in the one or more candidate cells, the one or more processors are configured to, in response to the signal quality of the current serving cell being lower than a second quality threshold, determine a cell supporting the target slice and having a signal quality higher than a third quality threshold in one or more low-priority frequency cells of the current serving cell as a candidate cell, in which the cell reselection is the low-priority frequency cell reselection.

In an embodiment, the cell reselection includes a high-priority frequency and/or the low-priority frequency cell reselection, the one or more processors are configured to determine whether there is a frequency with a higher priority compared to the current serving cell, in which the frequency with the higher priority is a frequency associated with the target slice; and
in response to there being the frequency with the higher priority compared to the current serving cell, measure a signal quality of a high-priority frequency cell.

In an embodiment, the one or more processors are configured to determine a cell supporting the target slice and having a signal quality higher than a fourth quality threshold in one or more high-priority frequency cells of the current serving cell as a candidate cell, in which the cell reselection is the high-priority frequency cell reselection.

In an embodiment, the one or more processors are configured to, in response to the signal quality of the current service cell being lower than the second quality threshold or the current service cell not supporting the target slice, and in response to there being a cell supporting the target slice in one or more intra-frequency cells of the current serving cell, measure a signal quality of an intra-frequency cell of the current serving cell in the one or more candidate cells.

In an embodiment, the one or more processors are configured to determine a cell supporting the target slice in the one or more intra-frequency cells of the current serving cell as a candidate cell.

In an embodiment, the one or more processors are further configured to: determine a priority relationship among frequencies associated with the target slice;
sort cells corresponding to the frequencies based on priorities of the frequencies; and
determine a cell with a highest order and supporting the target slice in the sorted cells as a target cell for the cell reselection.

In an embodiment, the one or more processors are configured to: determine whether the cell with the highest order supports the target slice;
in response to the cell with the highest order supporting the target slice, determine the cell with the highest order as the target cell;
in response to the cell with the highest order not supporting the target slice, repeatedly perform a step of determining whether a cell with a one-level lower order supports the target slice, until the cell supporting the target slice is determined or it is determined that no cell supports the target slice.

In an embodiment, the target slice includes a slice with a highest priority in the expected slices of the terminal.

In an embodiment, the target slice includes the expected slices of the terminal, the one or more processors are further configured to: perform the above operations of determining a target cell for the slice with the highest priority in the expected slices; and in response to determining no target cell, repeatedly perform a step of performing the above operations of determining a target cell for a slice with a one-level lower priority in the expected slices, until the target cell is determined or no target cell is determined for all slices in the expected slices.

With regard to the device in the above embodiments, specific manner each module performs the operation has been described in detail in the embodiments of the method and will not be elaborated here.

A support indication device is provided in the embodiments of the present disclosure. The support indication device can be applied to a network device. The network device includes, but is not limited to, a network device in a communication system such as 4G, 5G, and 6G, for example a base station, a core network, etc. The network device may communicate with a terminal. The terminal includes, but is not limited to, a mobile phone, a tablet computer, a wearable device, a sensor, an internet of things device, or other communication devices.

The device includes one or more processors, the one or more processors are configured to send indication information to a terminal, in which indication information is configured for the terminal to determine one or more candidate cells supporting a target slice to be accessed in one or more cells, and the one or more cells correspond to at least one frequency associated with the target slice.

In an embodiment, the target slice includes a slice with a highest priority in expected slices of the terminal.

In an embodiment, the indication information is configured to indicate whether the one or more cells corresponding to the at least one frequency support the slice with the highest priority.

In an embodiment, the indication information is configured to indicate whether at least one of the one or more cells corresponding to the at least one frequency supports the slice with the highest priority.

In an embodiment, the indication information is configured to indicate one or more slices supported by the one or more cells corresponding to the at least one frequency.

In an embodiment, target slices further include other slices in the expected slices.

In an embodiment, the indication information is configured to indicate whether a list of target slices supported by the at least one frequency is applicable to all cells corresponding to the at least one frequency.

In an embodiment, the indication information is configured to indicate one or more cells to which a list of target slices supported by the at least one frequency is applicable.

In an embodiment, the indication information is configured to indicate one or more slices supported by one or more cells corresponding to each frequency.

The embodiments of the device, since it basically corresponds to method embodiments, reference may be made to the description of the method embodiments. The embodiments of the device described above are only schematic, in which the above modules described as separate parts may or may not be physically separated, the parts shown as modules may or may not be physical modules, that is, may be located in one place, or may be distributed on a plurality of network modules. Some or all modules may be selected according to the actual requirements to achieve the purpose of the present disclosure. Those skilled in the art may understand and implement it without any creative effort.

A communication device is provided in the embodiments of the present disclosure, including: a processor; and a memory for storing a computer program. When the computer program is executed by the processor, the cell determination method according to any one of the foregoing embodiments is implemented.

A communication device is provided in the embodiments of the present disclosure, including: a processor; and a memory for storing a computer program. When the computer program is executed by the processor, the support indication method according to any one of the foregoing embodiments is implemented.

A computer readable storage medium storing a computer program is provided in the embodiments of the present disclosure, and when the computer program is executed by a processor, the steps in the support indication method according to any one of the foregoing embodiments are implemented.

A computer readable storage medium with a computer program stored thereon is provided in the embodiments of the present disclosure, and when the computer program is executed by a processor, the steps in the support indication method according to any one of the foregoing embodiments are implemented.

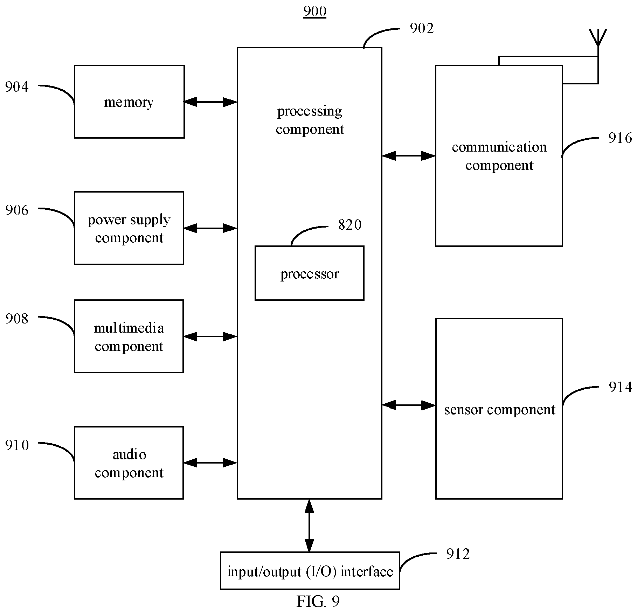

FIG. 9 is a block diagram of a cell determination device 900 according to an embodiment of the present disclosure. For example, the device 900 may be a mobile phone, a computer, a digital broadcasting terminal, a messaging device, a game console, a tablet device, a medical equipment, a fitness equipment, a personal digital assistant, etc.

Referring to FIG. 9, the device 900 may include one or more components: a processing component 902, a memory 904, a power supply component 906, a multimedia component 908, an audio component 910, an input/output (I/O) interface 912, a sensor component 914, and a communication component 916.

The processing component 902 generally controls the overall operations of the device 900, such as the operations related to display, phone call, data communication, camera operation and recording operation. The processing component 902 may include one or more processors 920 to perform instructions, to complete all or part of steps of the above method. In addition, the processing component 902 may include one or more modules for the convenience of interaction between the processing component 902 and other components. For example, the processing component 902 may include a multimedia module for the convenience of interaction between the multimedia component 908 and the processing component 902.

The memory 904 is configured to store all types of data to support the operation of the device 900. Examples of the data include the instructions of any applications or methods operated on the device 900, contact data, phone book data, messages, pictures, videos, etc. The memory 904 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 may provide power supply for all components of the device 900. The power supply component 906 may include power supply management system, or more power supplies, and other units related to generating, managing and distributing power for the device 900.

The multimedia component 908 includes an output interface screen provided between the device 900 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 908 includes a front camera and/or a rear camera. When the device 900 is in operation mode, such as shooting mode or video mode, the front camera or the rear camera may receive the external multimedia data. Each front camera and rear camera may be a fixed optical lens system or an optical lens system with focal length and optical zoom capacity.

The audio component 910 is configured as an output and/or input signal. For example, the audio component 910 includes a microphone (MIC). When the device 900 is in operation mode, such as call mode, record mode, and speech recognition mode, the microphone is configured to receive the external audio signals. The audio signals received may be further stored in the memory 904 or sent via the communication component 916. In some embodiments, the audio component 910 further includes a speaker configured to output an audio signal.

The I/O interface 912 provides an interface for the processing component 902 and the peripheral interface module, and the peripheral interface module may be a keyboard, a click wheel, a button, etc. The buttons may include but not limited to a home button, a volume button, a start button and a lock button.

The sensor component 914 includes one or more sensors, configured to provide various aspects of status assessment for the device 900. For example, the sensor component 914 may detect the on/off state of the device 900 and the relative positioning of the component. For example, the component is a display and a keypad of the device 900. The sensor component 914 may further detect the location change of the device 900 or one component of the device 900, the presence or absence of contact between the user and the device 900, the orientation or acceleration/deceleration of the device 900, and the temperature change of the device 900. The sensor component 914 may include a proximity sensor, which is configured to detect the existence of the objects nearby without any physical contact. The sensor component 914 may further include a light sensor such as CMOS or CCD image sensor, which is configured to use in imaging applications. In some embodiments, the sensor component 914 may further include an acceleration transducer, a gyroscope sensor, a magnetic sensor, a pressure sensor or a temperature sensor.

The communication component 916 is configured for the convenience of wire or wireless communication between the device 900 and other devices. The device 900 may access wireless networks based on communication standard, such as WiFi, 2G or 3G, 4G LTE, 5G NR or their combination. In an exemplary embodiment, the communication component 916 receives broadcast signals or broadcast-related information from an external broadcast management system via a broadcast channel. In an exemplary embodiment, the communication component 916 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the device 900 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-temporary computer readable storage medium is further provided which includes instructions, such as the memory 904 including instructions. The instructions may be executed by the processor 920 of the device 900 to complete the above methods. For example, the non-transitory computer readable storage medium may be a ROM, a random access memory (RAM), a CD-ROM, a magnetic tape, a floppy disk, an optical data storage device, etc.

After considering the specification and practicing the disclosure herein, those skilled in the art will easily think of other embodiments of the present application. The present application is intended to cover any variations, usages, or adaptive changes of the present application. These variations, usages, or adaptive changes follow the general principles of the present application and include common knowledge or conventional technical means in the technical field not disclosed by the present application. The description and the embodiments are to be regarded as exemplary only, and the true scope and spirit of the present application are referred to the appended claims. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

It should be noted that relational terms such as first and second are used herein to distinguish one entity or operation from another entity or operation without necessarily requiring or implying any such actual relationship or order between such entities or operations. The terms "comprise", "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or device that includes the elements.

The above are detailed descriptions of embodiments of the present disclosure. Specific examples are applied to elaborate principles and implementations of the present disclosure. The descriptions of the above embodiments are only configured to help understand the method and core concepts of the present disclosure; at the same time, for those skilled in the art, there may be changes in the specific implementation and application scope according to the idea of the present disclosure. In summary, the contents of the summary should not be construed as a limitation of the present disclosure.

## Claims

1. A cell determination method, applicable to a terminal, comprising:
determining a target slice to be accessed and at least one frequency associated with the target slice; and
determining one or more candidate cells supporting the target slice in one or more cells corresponding to the at least one frequency.

2. The method of claim 1, further comprising:
determining a priority relationship among frequencies associated with the target slice; and
performing a cell reselection in the one or more candidate cells based on priorities of the frequencies.

3. The method of claim 2, wherein the target slice is at least one slice in expected slices of the terminal.

4. The method of claim 3, wherein the target slice comprises a slice with a highest priority in the expected slices.

5. The method of claim 4, wherein determining the one or more candidate cells supporting the target slice in the one or more cells corresponding to the at least one frequency comprises:
determining whether the one or more cells corresponding to the at least one frequency support the slice with the highest priority based on indication information of a network device; and
in response to all cells of the one or more cells corresponding to the at least one frequency supporting the slice with the highest priority, determining the one or more cells corresponding to the at least one frequency as the one or more candidate cells.

6. The method of claim 4, wherein determining the one or more candidate cells supporting the target slice in the one or more cells corresponding to the at least one frequency comprises:
determining one or more slices supported by the one or more cells corresponding to the at least one frequency based on indication information of a network device; and
determining one or more cells supporting the slice with the highest priority in the one or more cells corresponding to the at least one frequency as the one or more candidate cells.

7. The method of claim 4, wherein determining the one or more candidate cells supporting the target slice in the one or more cells corresponding to the at least one frequency comprises:
determining, based on indication information of a network device, a cell list comprising one or more cells that support the slice with the highest priority in the one or more cells corresponding to the at least one frequency; and
determining the one or more cells in the cell list as the one or more candidate cells.

8. The method of claim 4, wherein performing the cell reselection in the one or more candidate cells based on the priorities of the frequencies comprises:
determining one or more candidate cells corresponding to a frequency with a highest priority associated with the slice with the highest priority;
determining a target cell based on a signal quality in the one or more candidate cells corresponding to the frequency with the highest priority;
in response to determining no target cell in the one or more candidate cells corresponding to the frequency with the highest priority, repeatedly performing a step of determining the target cell based on the signal quality in one or more candidate cells corresponding to a frequency with a one-level lower priority, until the target cell is determined or no target cell is determined in candidate cells corresponding to frequencies with all priorities;
sorting target cells based on the signal quality; and
performing the cell reselection in the sorted target cells based on an order of the target cells.

9. The method of claim 8, further comprising:
in response to determining no target cell in cells corresponding to all frequencies associated with the slice with the highest priority, performing the cell reselection based on priorities of the frequencies indicated by a network device.

10. The method of claim 8, wherein the target slice further comprises other slices in the expected slices.

11. The method of claim 10, wherein performing the cell reselection in the one or more candidate cells based on the priorities of the frequencies further comprises:
in response to determining no target cell in cells corresponding to all frequencies associated with the slice with the highest priority, repeatedly performing a step of determining a slice with a one-level lower priority in the other slices and determining the target cell based on the signal quality in one or more candidate cells corresponding to a frequency associated with the slice with the one-level lower priority, until the target cell is determined or no target cell is determined in cells corresponding to frequencies associated with target slices with all priorities.

12. The method of claim 11, wherein determining the target cell based on the signal quality in the one or more candidate cells corresponding to the frequency associated with the slice with the one-level lower priority comprises:
determining one or more candidate cells corresponding to a frequency with a highest priority associated with the slice with the one-level lower priority;
determine the target cell based on the signal quality in the one or more candidate cells corresponding to the frequency with the highest priority; and
in response to determining no target cell in the one or more candidate cells corresponding to the frequency with the highest priority, repeatedly performing the step of determining the target cell based on the signal quality in one or more candidate cells corresponding to a frequency with a one-level lower priority, until the target cell is determined or no target cell is determined in candidate cells corresponding to frequencies with all priorities.

13. The method of claim 11, wherein in a case that the target cell is determined in the one or more candidate cells corresponding to the frequency associated with the slice with the one-level lower priority, performing the cell reselection in the target cells based on the order of the target cells comprises:
in a case that a target cell with the highest order corresponding to the frequency associated with the slice with the one-level lower priority is a suitable cell, reselecting the target cell with the highest order; and
in a case that the target cell with the highest order corresponding to the frequency associated with the slice with the one-level lower priority is not a suitable cell, and that the target cell with the highest order corresponding to the frequency associated with the slice with the one-level lower priority and an intra-frequency cell thereof only support the slice with the one-level lower priority, withholding the cell reselection in the target cell with the highest order corresponding to the frequency associated with the slice with the one-level lower priority and the intra-frequency cell thereof within a preset duration.

14. The method of claim 10, wherein determining the one or more candidate cells supporting the target slice in the one or more cells corresponding to the at least one frequency comprises:
determining a list of target slices supported by the at least one frequency;
determining whether the list is applicable to all of one or more cells corresponding to the at least one frequency based on indication information of the network device; and
in response to determining that the list is applicable to all of the one or more cells corresponding to the at least one frequency, determining all of the one or more cells corresponding to the at least one frequency as one or more candidate cells corresponding to the target slices associated with the at least one frequency.

15. The method of claim 10, wherein determining the one or more candidate cells supporting the target slice in the one or more cells corresponding to the at least one frequency comprises:
determining a list of target slices supported by the at least one frequency;
determining one or more cells to which the list is applicable based on indication information of the network device; and
determining the one or more cells as one or more candidate cells corresponding to the target slices associated with the at least one frequency.

16. The method of claim 10, wherein determining the one or more candidate cells supporting the target slice in the one or more cells corresponding to the at least one frequency comprises:
determining, based on indication information of the network device, one or more slices supported by one or more cells corresponding to each frequency; and
determining, in the one or more cells corresponding to each frequency, one or more cells supporting target slices associated with the at least one frequency as one or more candidate cells corresponding to the target slices associated with the at least one frequency.

17. The method of any of claims 8 to 16, wherein the cell reselection comprises a same-priority frequency cell reselection and/or a low-priority frequency cell reselection, and the method further comprises:
in response to a signal quality of a current serving cell being lower than a first quality threshold or the current serving cell not supporting the target slice, measuring a signal quality of a same-priority frequency cell and/or a low-priority frequency cell of the current serving cell in the one or more candidate cells.

18. The method of claim 17, wherein in a case of measuring the signal quality of the same-priority frequency cell of the current serving cell in the one or more candidate cells, determining the one or more candidate cells supporting the target slice in the one or more cells corresponding to the at least one frequency comprises:
determining one or more candidate cells supporting the target slice in one or more same-priority frequency cells of the current serving cell, wherein the cell reselection is the same-priority frequency cell reselection.

19. The method of claim 17, wherein in a case of measuring the signal quality of the low-priority frequency cell of the current serving cell in the one or more candidate cells, the method further comprises:
in response to the signal quality of the current serving cell being lower than a second quality threshold, determining a cell supporting the target slice and having a signal quality higher than a third quality threshold in one or more low-priority frequency cells of the current serving cell as a candidate cell, wherein the cell reselection is the low-priority frequency cell reselection.

20. The method of claim 17, wherein the cell reselection comprises a high-priority frequency cell reselection, and the method further comprises:
determining whether there is a frequency with a higher priority compared to the current serving cell, wherein the frequency with the higher priority is a frequency associated with the target slice; and
in response to there being the frequency with the higher priority compared to the current serving cell, measuring a signal quality of a high-priority frequency cell.

21. The method of claim 20, further comprising:
determining a cell supporting the target slice and having a signal quality higher than a fourth quality threshold in one or more high-priority frequency cells of the current serving cell as a candidate cell, wherein the cell reselection is the high-priority frequency cell reselection.

22. The method of claim 17, further comprising:
in response to the signal quality of the current service cell being lower than the second quality threshold or the current service cell not supporting the target slice, and in response to there being a cell supporting the target slice in one or more intra-frequency cells of the current serving cell, measuring a signal quality of an intra-frequency cell of the current serving cell in the one or more candidate cells.

23. The method of claim 22, wherein determining the one or more candidate cells supporting the target slice in the one or more cells corresponding to the at least one frequency comprises:
determining a cell supporting the target slice in the one or more intra-frequency cells of the current serving cell as a candidate cell.

24. The method of claim 1, further comprising:
determining a priority relationship among frequencies associated with the target slice;
sorting cells corresponding to the frequencies based on priorities of the frequencies; and
determining a cell with a highest order and supporting the target slice in the sorted cells as a target cell for the cell reselection.

25. The method of claim 24, wherein determining the cell with the highest order and supporting the target slice in the sorted cells as the target cell for the cell reselection comprises:
determining whether the cell with the highest order supports the target slice;
in response to the cell with the highest order supporting the target slice, determining the cell with the highest order as the target cell;
in response to the cell with the highest order not supporting the target slice, repeatedly performing a step of determining whether a cell with a one-level lower order supports the target slice, until the cell supporting the target slice is determined or it is determined that no cell supports the target slice.

26. The method of claim 24, wherein the target slice comprises a slice with a highest priority in expected slices of the terminal.

27. The method of claim 24, wherein the target slice comprises expected slices of the terminal, the method further comprises:
performing the steps in claim 25 for a slice with a highest priority in the expected slices; and
in response to determining no target cell, repeatedly performing a step of performing the steps in claim 25 for a slice with a one-level lower priority in the expected slices, until the target cell is determined or no target cell is determined for all slices in the expected slices.

28. A support indication method, applicable to a network device, comprising:
sending indication information to a terminal, wherein the indication information is configured for the terminal to determine one or more candidate cells supporting a target slice to be accessed in one or more cells, and the one or more cells correspond to at least one frequency associated with the target slice.

29. The method of claim 28, wherein the target slice comprises a slice with a highest priority in expected slices of the terminal.

30. The method of claim 29, wherein the indication information is configured to indicate whether the one or more cells corresponding to the at least one frequency support the slice with the highest priority.

31. The method of claim 29, wherein the indication information is configured to indicate whether the one or more cells corresponding to the at least one frequency support the slice with the highest priority.

32. The method of claim 29, wherein the indication information is configured to indicate one or more slices supported by the one or more cells corresponding to the at least one frequency.

33. The method of claim 28, wherein the target slice further comprises other slices in the expected slices.

34. The method of claim 33, wherein the indication information is configured to indicate whether a list of target slices supported by the at least one frequency is applicable to all cells corresponding to the at least one frequency.

35. The method of claim 33, wherein the indication information is configured to indicate one or more cells to which a list of target slices supported by the at least one frequency is applicable.

36. The method of claim 33, wherein the indication information is configured to indicate one or more slices supported by one or more cells corresponding to each frequency.

37. A cell determination device, applicable to a terminal, comprising one or more processors, and the one or more processors are configured to: determine a target slice to be accessed and at least one frequency associated with the target slice; and determine one or more candidate cells supporting the target slice in one or more cells corresponding to the at least one frequency.

38. A support indication device, applicable to a network device, comprising one or more processors, the one or more processors are configured to: send indication information to a terminal, wherein the indication information is configured for the terminal to determine one or more candidate cells supporting a target slice to be accessed in one or more cells, and the one or more cells correspond to at least one frequency associated with the target slice.

39. A communication device, comprising:
a processor;
a memory configured to store a computer program;
wherein the computer program implements the cell determination method of any one of claims 1 to 27, when executed by the processor.

40. A communication device, comprising:
a processor;
a memory configured to store a computer program;
wherein the computer program implements the support indication method of any one of claims 28 to 36, when executed by the processor.

41. A computer readable storage medium storing a computer program, wherein the computer program is configured to implement the method of any one of claims 1 to 27, when executed by a processor.

42. A computer readable storage medium storing a computer program, wherein the computer program is configured to implement the method of any one of claims 28 to 36, when executed by a processor.
